(19) Europäisches Patentamt
European Patent Office
Office européen des brevets

(11) Publication number: 0 038 615 A2

(12) # EUROPEAN PATENT APPLICATION

(21) Application number: 81300645.9

(22) Date of filing: 17.02.81

(51) Int. Cl.$^3$: C 09 B 29/01 //D06P1/18

(30) Priority: 03.04.80 GB 8011379

(43) Date of publication of application: 28.10.81 Bulletin 81/43

(84) Designated Contracting States: CH DE FR GB IT LI

(71) Applicant: IMPERIAL CHEMICAL INDUSTRIES LIMITED
Imperial Chemical House Millbank
London SW1P 3JF(GB)

(72) Inventor: Sayer, Trevor Stephen Beverley
9 Capton Close
Bramhall Stockport SK7 3DE(GB)

(72) Inventor: Thompson, David John
50 Marle Croft
Old Hall Park Whitefield Manchester(GB)

(74) Representative: Stephenson, Kenneth et al,
Imperial Chemical Industries Limited Legal Department: Patents Thames House North Millbank
London SW1P 4QG(GB)

(54) **Disperse monoazo dyes.**

(57) Disperse monoazo dyes having the formula:

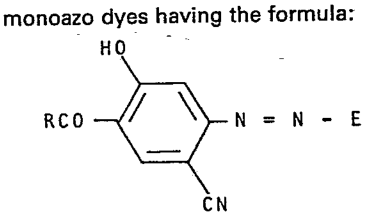

wherein R is a lower alkyl or lower alkoxy radical and E is the residue of a coupling component free from sulphonic or carboxylic acid groups, especially a coupling component of the aniline series.

The dyes are useful for colouring polyester and other synthetic textile materials in red to violet shades.

EP 0 038 615 A2

Croydon Printing Company Ltd.

This invention relates to disperse monoazo dyes, their preparation and their application to textile materials.

According to the invention, there are provided disperse monoazo dyes which have the formula:

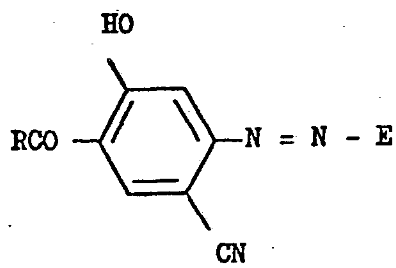

wherein R represents a lower alkyl or lower alkoxy radical and E represents the residue of a coupling component free from sulphonic or carboxylic acid groups.

The expressions "lower alkyl" and "lower alkoxy" used herein mean alkyl and alkoxy radicals containing from one to four carbon atoms.

The residue of the coupling component free from sulphonic or carboxylic acid groups represented by E may be the residue of any of the known series of coupling components (that is to say compounds which react with a diazonium compound forming an azo dye). Thus, E may be the residue of a coupling component of the acylacetarylamide, pyrazolone, aminopyrazole, phenol, naphthol, 2,6-dihydroxypyridine, 2,6-diaminopyridine, indole or arylamine series and may contain any of the substituents appropriate to such residues except sulphonic or carboxylic acid groups.

A preferred class of disperse dyes within the scope of the invention comprises dyes of the formula:

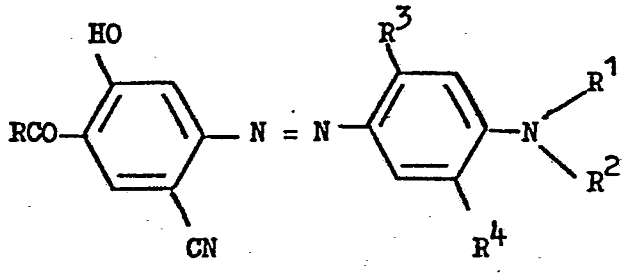

wherein R has the meaning given above, $R^1$ represents hydrogen or an optionally substituted alkyl, alkenyl, aralkyl, cycloalkyl or aryl radical, $R^2$ represents hydrogen or an optionally substituted alkyl, alkenyl or aralkyl radical, $R^3$ represents hydrogen, chlorine, bromine or an alkyl, alkoxy or acylamino radical and $R^4$ represents hydrogen, chlorine, bromine or an alkyl or alkoxy radical.

The alkyl radicals which may be represented by $R^1$, $R^2$, $R^3$ and $R^4$ are preferably lower alkyl radicals and the alkoxy radicals which may be represented by $R^3$ and $R^4$ are preferably lower alkoxy radicals. The alkenyl radicals which may be represented by $R^3$ and $R^4$ preferably contain from two to four carbon atoms. Substituents which may be present on the optionally substituted alkyl radicals represented by $R^1$ and $R^2$ include hydroxy, alkoxy, cyano, carboxy, alkoxycarbonyl, hydroxyalkoxy, alkoxyalkoxy, alkoxyalkoxycarbonyl, acyloxy, chloro, alkoxycarbonyloxy and acylamino.

Acylamino groups which may be represented by $R^3$ include groups of the formulae $-NHCOT^1$ and $-NHSO_2T^2$ wherein $T^1$ represents hydrogen. alkyl, alkoxycarbonylalkyl, alkoxy, aryl, amino or alkylamino and $T^2$ represents $C_{1-4}$ alkyl or aryl.

Aryl groups which may be present in the disperse dyes include phenyl and tolyl, aralkyl groups include benzyl and cycloalkyl groups include cyclohexyl and methylcyclohexyl.

The dyes of the invention may be prepared by diazotising a primary amine of the formula:

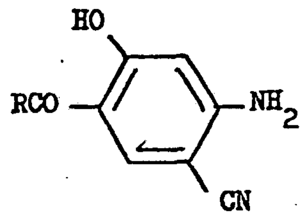

wherein R has the meaning given above, and coupling the resulting diazo compound with a coupling component containing no sulphonic or carboxylic acid groups.

The primary amines may themselves be prepared by methods that have been described in the literature. Thus, those primary amines in which R is a lower alkyl radical may be prepared as described by S.R.Baker et al in the Journal of the Chemical Society, Perkin I, 1979, pages 677-685. The primary amines in which R is a lower alkoxy radical may be prepared as described by H.W.Schmidt and H.Junek in Liebigs Annalen der Chemie, 1979, pages 2005-2010.

As examples of coupling components for use in making the disperse dyes, particular mention may be made of arylamines of the formula:

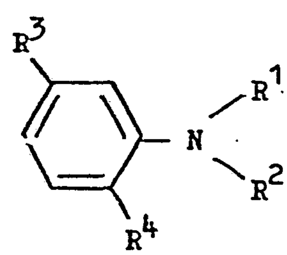

in which $R^1$, $R^2$, $R^3$ and $R^4$ have the meanings given above. Examples of such arylamines include N,N-diethyl-m-aminoacetanilide, 2,5-dimethoxyaniline, N,N-diethylaniline, N,N-di(β-hydroxyethyl)-m-toluidine, N,N-di(β-cyanoethyl)-aniline, N-ethyl-N-(β-ethoxyethyl)aniline, N,N-di(β-

carbomethoxyethyl)-m-toluidine, N-[β-(β'-methoxyethoxycarbonyl)ethyl]-m-toluidine, 2-methoxy-5-acetylamino-N-[β-)β'-methoxyethoxycarbonyl)ethyl]aniline, N,N-do(β-acetoxyethyl)-m-toluidine, N-ethyl-N-(β-cyanoethyl)aniline, N-ethyl-N-(δ-acetoxybutyl)aniline and N-ethyl-N-benzyl-m-toluidine.

The reactions leading to the formation of the dyes of the invention may be performed using conditions that have been fully described in the prior art for such reactions. Similarly the dyes may be isolated by known methods.

The disperse dyes of the invention are valuable for colouring synthetic textile materials, in particular secondary cellulose acetate and cellulose triacetate textile materials, polyamide textile materials such as nylon 6 and nylon 66 textile materials and, above all, aromatic polyester textile materials such as polyethylene terephthalate textile materials. Such materials can be in the form of filaments, fibres or woven or knitted materials. The dyes may be applied to the synthetic textile materials by any of the methods conventionally employed for the application of disperse dyes to such materials.

When applied to synthetic textile materials, the disperse dyes of the invention give various shades having excellent fastness to light and to wet and dry treatments. The dyes also have excellent dyeing properties, particularly on aromatic

polyester textile materials. The dyes containing carboxylic acid ester groups are especially valuable in printing processes because they are readily cleared by washing the printed fabric in warm aqueous alkali, thus minimising unwanted staining. The dyes can also be used for the mass coloration of synthetic polymers which are subsequently to be converted into fibres or filaments or they can be applied to synthetic textile materials by the process of transfer colour printing optionally at reduced air pressures or under wet or humid conditions.

The invention is illustrated but not limited by the following Examples in which all parts are by weight unless otherwise stated.

Example 1

A solution of 1.7 parts of nitrosyl sulphuric acid (40%) in 5 parts of concentrated sulphuric acid is added to 20 parts of an 86/14 (by volume) mixture of acetic and propionic acids at 20°C. This solution is then cooled to 0°C and 2.06 parts of 4-amino-5-cyano salicylic acid ethyl ester are added. The solution is stirred for 2 hours at 0°C to complete diazotisation.

The diazo solution so obtained is then added to 2.06 parts of N,N-diethyl-m-aminoacetanilide which has been previously dissolved in 20 parts of acetic anhydride and added to a slurry of ice/water and 20 parts of 1M sulphamic acid. The solution is stirred and buffered to Congo Red by the addition of 33% sodium acetate solution. Coupling takes place efficiently and a bright red dye is precipitated. The suspension is stirred for 2 hours and the dye is removed by filtration, washed and dried.

The dye, which has the structure:

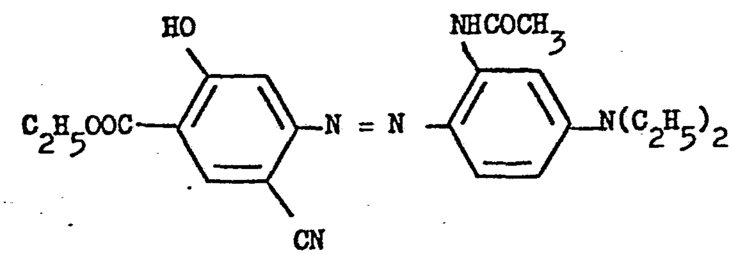

dyes aromatic polyester textile material in a fast bright red shade when applied from an aqueous dispersion.

Table 1 gives further Examples of the dyes of the invention which may be prepared, by a method analogous to that described in Example 1, by diazotising 4-amino-5-cyano-2-hydroxyacetophenone and coupling the resulting diazo compound with a coupling component of the formula:

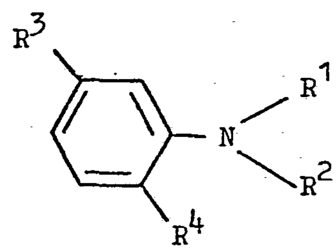

The dyes are identified in the table by the substituents $R^1$ - $R^4$ present in the coupling component. The final column of the table gives the shades obtained when the dyes are applied to aromatic polyester textile materials.

TABLE 1

| Example | $R^1$ | $R^2$ | $R^3$ | $R^4$ | Shade |
|---|---|---|---|---|---|
| 2 | ethyl | ethyl | acetylamino | H | Rubine |
| 3 | cyclohexyl | H | " | H | Bluish-red |
| 4 | propyl | propyl | methylsulphonylamino | H | " |
| 5 | H | H | acetylamino | H | Red |
| 6 | _sec_-butyl | H | " | H | Bluish-red |
| 7 | ethyl | ethoxycarbonylethyl | " | H | " |
| 8 | " | β-cyanoethyl | " | H | Red |
| 9 | H | methoxyethoxy-carbonylethyl | " | methoxy | Violet |
| 10 | methoxycarbonylethyl | methoxycarbonylethyl | " | H | Red |
| 11 | ethoxyethyl | ethoxyethyl | " | H | Bluish-red |
| 12 | ethyl | β-cyanoethyl | H | H | Scarlet |
| 13 | benzyl | ethyl | H | H | Red |
| 14 | ethyl | β-hydroxyethyl | methyl | H | Bluish-red |
| 15 | methoxycarbonylethyl | methoxycarbonylethyl | H | H | Scarlet |
| 16 | β-acetoxyethyl | β-acetoxyethyl | methyl | H | Red |
| 17 | H | H | " | methyl | " |

| Example | $R^1$ | $R^2$ | $R^3$ | $R^4$ | Shade |
|---|---|---|---|---|---|
| 18 | β-acetoxyethyl | β-acetoxyethyl | methyl | methoxy | Rubine |
| 19 | β-hydroxyethyl | β-hydroxyethyl | chlorine | H | Scarlet |
| 20 | methoxycarbonylethyl | H | methoxy | chlorine | Orange |
| 21 | " | methoxycarbonylethyl | acetylamino | methoxy | Violet |
| 22 | ethyl | ethyl | β-methoxycarbonyl propionylamino | H | Rubine |
| 23 | " | β-cyanoethyl | " | H | Red |
| 24 | " | methoxycarbonylethyl | " | H | " |

Table 2 gives further Examples of the dyes of the invention which may be prepared, by the method described in Example 1 if the N,N-diethyl-m-aminoacetanilide is replaced by a coupling component of the formula:

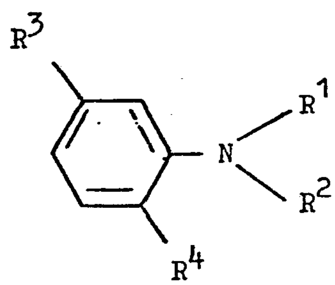

As in Table 1, the dyes are identified by the substituents in the coupling component and the final column gives the shades on aromatic polyester textiles.

TABLE 2

| Example | $R^1$ | $R^2$ | $R^3$ | $R^4$ | Shade |
|---|---|---|---|---|---|
| 25 | β-methoxycarbonylethyl | β-methoxycarbonylethyl | acetylamino | H | Red |
| 26 | " | " | H | H | Scarlet |
| 27 | " | " | acetylamino | methoxy | Violet |
| 28 | " | ethyl | β-methoxy carbonyl propionylamino | H | Red |

## CLAIMS

1. A disperse monoazo dye having the formula:

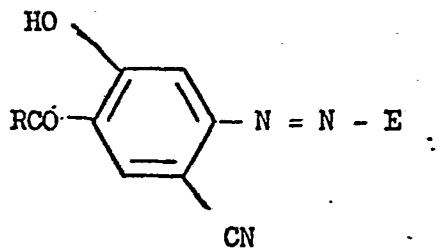

wherein R represents a lower alkyl or lower alkoxy radical and E represents the residue of a coupling component free from sulphonic or carboxylic acid groups.

2. A disperse monoazo dye according to claim 1 having the formula:

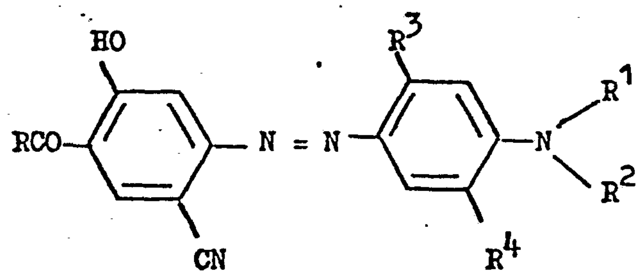

wherein R has the meaning given in claim 1, $R^1$ represents hydrogen or an optionally substituted alkyl, alkenyl, aralkyl, cycloalkyl or aryl radical, $R^2$ represents hydrogen or an optionally substituted alkyl, alkenyl or aralkyl radical, $R^3$ represents hydrogen, chlorine, bromine or an alkyl, alkoxy or acylamino radical and $R^4$ represents hydrogen, chlorine, bromine or an alkyl or alkoxy radical.

3. A method for the preparation of a disperse monoazo dye as defined in claim 1 which comprises diazotising a primary amine of the formula:

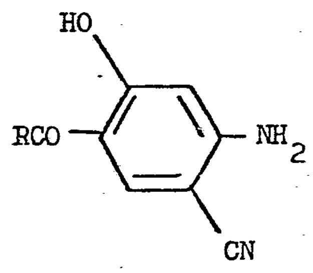

wherein R has the meaning given in claim 1, and coupling the resulting diazo compound with a coupling component containing no sulphonic or carboxylic acid groups.

4. A process for the colouration of synthetic textile materials which comprises applying thereto a disperse monoazo dye as defined in claim 1.

KS/BH
11.2.81.